(19) Europäisches Patentamt
European Patent Office
Office européen des brevets

(11) **EP 3 023 815 B1**

## (12) FASCICULE DE BREVET EUROPEEN

(45) Date de publication et mention
de la délivrance du brevet:
**26.05.2021 Bulletin 2021/21**

(51) Int Cl.:
**G01V 99/00** *(2009.01)*

(21) Numéro de dépôt: **15306793.9**

(22) Date de dépôt: **12.11.2015**

(54) **PROCÉDÉ DE CONSTRUCTION D'UN MODELE GEOLOGIQUE**

KONSTRUKTIONSVERFAHREN EINES GEOLOGISCHEN MODELLS

METHOD OF CONSTRUCTING A GEOLOGICAL MODEL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.11.2014 FR 1461100**

(43) Date de publication de la demande:
**25.05.2016 Bulletin 2016/21**

(73) Titulaire: **IFP Energies nouvelles
92500 Rueil-Malmaison (FR)**

(72) Inventeur: **Leger, Michel
92500 RueilL Malmaison (FR)**

(74) Mandataire: **IFP Energies nouvelles
Département Propriété Industrielle
Rond Point de l'échangeur de Solaize
BP3
69360 Solaize (FR)**

(56) Documents cités:
**EP-A1- 0 889 331       EP-A1- 1 637 904
US-A1- 2010 225 647   US-B1- 8 369 653**

- **MALLET J L ED - HORMANN KAI ET AL:
"DISCRETE SMOOTH INTERPOLATION IN
GEOMETRIC MODELLING", COMPUTER AIDED
DESIGN, ELSEVIER PUBLISHERS BV.,
BARKING, GB, vol. 24, no. 4, 1 avril 1992
(1992-04-01), pages 178-191, XP000268836, ISSN:
0010-4485, DOI: 10.1016/0010-4485(92)90054-E**
- **PIDLISECKY A ET AL: "CONE-BASED
ELECTRICAL RESISTIVITY TOMOGRAPHY",
GEOPHYSICS, SOCIETY OF EXPLORATION
GEOPHYSICISTS, US, vol. 71, no. 5, 1 juillet 2006
(2006-07-01), pages G157-G167, XP001245362,
ISSN: 0016-8033, DOI: 10.1190/1.2213205**
- **FRANK ET AL: "3D-reconstruction of complex
geological interfaces from irregularly distributed
and noisy point data", COMPUTERS AND
GEOSCIENCES, PERGAMON PRESS, OXFORD,
GB, vol. 33, no. 7, 5 juin 2007 (2007-06-05), pages
932-943, XP022104727, ISSN: 0098-3004**
- **U M ASCHER ET AL: "Grid refinement and scaling
for distributed parameter estimation problems",
INVERSE PROBLEMS, vol. 17, no. 3, 1 juin 2001
(2001-06-01), pages 571-590, XP055201008, ISSN:
0266-5611, DOI: 10.1088/0266-5611/17/3/314**

**Description**

La présente invention concerne le domaine de l'exploration pétrolière, plus particulièrement le domaine de l'exploration et de l'exploitation des réservoirs pétroliers ou de sites de stockage géologique de gaz.

L'étude d'un champ pétrolier nécessite la construction d'une représentation de la formation souterraine étudiée, appelée aussi modèle géologique au sens large ou encore géomodèle. Ces modèles, bien connus et largement utilisés dans l'industrie pétrolière, permettent de déterminer de nombreux paramètres techniques relatifs à la recherche, l'étude ou l'exploitation d'un réservoir, d'hydrocarbures par exemple. Ainsi, un modèle géologique se doit d'être représentatif de la structure d'un réservoir ainsi que de son comportement. On peut ainsi par exemple déterminer les zones qui ont le plus de chance de contenir des hydrocarbures, les zones dans lesquelles il peut être opportun de forer un puits d'injection pour améliorer la récupération des hydrocarbures, le type d'outils à utiliser, les propriétés des fluides utilisés et récupérés, etc.

Ce type de maquette du sous-sol est le plus souvent représenté sur un ordinateur, par un maillage ou grille, généralement tridimensionnel, chaque maille étant caractérisée par une ou plusieurs propriétés pétrophysiques (faciès, porosité, perméabilité, saturation, etc). Avant même la phase de remplissage par des propriétés pétrophysiques d'un maillage 3D, la construction d'une telle maquette doit le plus fidèlement possible rendre compte de la géométrie des limites des différentes couches géologiques d'une formation, et de celle des failles qui intersectent les couches géologiques de cette formation.

L'information sur la géométrie des limites de couches géologiques et des failles provient généralement d'une interprétation d'une image sismique. Une image sismique présente les variations d'amplitude des ondes sismiques ayant été émises lors d'une campagne d'acquisition sismique, s'étant propagées dans une formation souterraine, et s'étant au moins partiellement réfléchies au niveau d'au moins une limite de couche géologique caractérisée par un contraste d'impédance sismique. On pourra se référer aux documents FR 2804513 B1 (US 6590832 B2) et FR 2874270 B1 (US 8014229 BB) concernant des moyens et méthodes d'acquisition sismique. Une image sismique est généralement donnée sous la forme d'une grille tridimensionnelle, orientée selon deux axes horizontaux, et selon un troisième axe vertical qui peut correspondre à la profondeur (cas d'une image sismique profondeur) ou bien au temps (dans le cas d'une image sismique temps ; on parle alors de profondeur-temps). Une limite de couches est alors une surface bidimensionnelle au sein d'une image sismique, et l'interprétation d'une limite de couches dans une image sismique résulte en une mesure de la profondeur ou du temps de la limite de couches en question en des mailles d'une grille bidimensionnelle dont le repère est orienté selon les axes horizontaux de l'image sismique.

L'interprétation des limites de couches géologiques d'une formation souterraine est généralement incomplète. En effet, une image sismique est le plus souvent bruitée, en particulier proche des failles, et plus généralement dans les zones structurellement complexes. Par conséquent, il n'est bien souvent pas aisé de suivre de façon continue chaque limite de couches. Le résultat d'une interprétation sismique consiste alors en des mesures éparses de la géométrie des limites des couches de la formation étudiée. On pourra se référer aux demandes FR 2854468 B1 (US 6868039 B2) et FR 1669778 B1 (US 734595 B2) concernant les difficultés d'interprétation de données sismiques. Afin de construire une maquette de la formation étudiée, il est donc généralement nécessaire de recourir à une étape permettant de compléter l'interprétation des limites de couches, de sorte à avoir une estimation de la géométrie de chacune des limites de couches de la formation en chacune des mailles de la grille sur laquelle est établie la maquette de la formation étudiée. Ce processus est généralement connu sous le terme d'interpolation de données, mais il faut l'entendre comme n'excluant pas une phase d'extrapolation. En effet, l'interpolation est utilisée pour remplir les mailles vides d'une grille situées dans des zones délimitées par des mesures effectives de la géométrie, et on a recours à une phase d'extrapolation pour des mailles situées en dehors des zones pour lesquelles on dispose de mesures.

Par ailleurs, bien souvent, les applications utilisant un modèle géologique (par exemple la tomographie de réflexion, l'inversion stratigraphique, la modélisation de bassin, la simulation de réservoir, ou encore la cartographie sur coordonnées UTM) ont besoin que les limites de couches d'un modèle géologique soient continûment dérivables (continuité C1). Plus précisément, ces méthodes ont besoin que l'interpolation/extrapolation des mesures éparses de la géométrie des limites de couches soit réalisée en respectant les pendages connus, c'est-à-dire que le pendage du résultat de l'interpolation/extrapolation en une maille donnée soit cohérent avec le pendage des mesures effectives de la géométrie des limites de couches, à leur frontière. Par pendage d'une limite de couches en une maille donnée, on entend l'angle entre la ligne de plus grande pente du plan que forme la limite de couches en question au niveau de la maille considérée, et un plan horizontal. Pour calculer un pendage en une maille donnée, on considère donc la maille en question et les mailles directement voisines.

**État de la technique**

Les documents suivants seront cités au cours de la description :

段 EP

Inoue, H., A least-Squares smooth fitting for irregularly spaced data: finite element approach using the cubic {B} -splines basis, Geophysics, 51, 2051-2066, 1986.
Léger M., Interpolation with Triangulated Surfaces and Curvature Minimisation, in Curves and Surfaces with Applications in CAGD, A. Le Méhauté, C. Rabut, and L. L. Schumaker (eds.), Vanderbilt Univ. Press, Nashville, 1997, 85-94.
Mallet, J.-L., Discrète smooth interpolation in geometric modelling. Computed-Aided Design. Vol 24, Issue 4, April 1992, pp 178-191.
Wheeler, H., Time-Stratigraphy, 1958, BULLETIN OF THE AMERICAN ASSOCIATION OF PETROLEUM GEOLOGISTS, VOL. 42, NO. 5 (MAY 1958), PP. 1047-1063.

De façon générale, une manière d'interpoler/extrapoler des mesures éparses sur toutes les mailles d'une grille consiste à calculer une représentation mathématique représentative desdites mesures. Dans le cas d'une limite de couches d'une formation, cela revient à déterminer une représentation mathématique couvrant toutes les mailles de la grille en question, et passant, au mieux, par les mesures effectives de la géométrie de ladite limite de couches.

Une méthode d'interpolation/extrapolation bien connue, intéressante du point de vue temps de calcul, est basée sur l'utilisation de fonctions B-splines (Inoue, 1986). Une fonction B-spline est générée par la sommation de polynômes d'un certain degré. Le plus souvent, ce sont des B-splines cubiques qui sont utilisées, basées sur des polynômes de degré 3. Ainsi, par construction, les dérivées premières et secondes d'une fonction B-spline cubique sont continues (continuité C1 et C2 respectivement). L'interpolation par fonction B-spline consiste généralement à résoudre un problème inverse régularisé, c'est-à-dire que l'on recherche les paramètres des polynômes de la fonction B-spline expliquant au mieux les mesures effectives de la géométrie des limites de couches, tout en satisfaisant un paramètre de régularisation portant sur le résultat recherché. Ainsi, le plus souvent, on va chercher à ce que le résultat de la fonction B-spline ne présente pas une rugosité importante, en particulier dans les zones où les mesures sont manquantes. Pour ce faire, on va chercher à minimiser les dérivées secondes de la fonction B-spline, tout en satisfaisant au mieux les mesures effectives de la géométrie des limites de couches. Toutefois, l'interpolation de mesures éparses sur une grille par fonction B-spline s'avère très sensible aux choix de la paramétrisation du problème inverse (nombre de paramètres de la fonction B-spline, poids de régularisation de la fonction objectif à minimiser en particulier) et requiert bien souvent plusieurs interventions manuelles de l'utilisateur avant d'obtenir un résultat géologiquement plausible.

Une autre méthode bien connue consiste à représenter les limites de couches par des surfaces triangulées (Mallet, 1992 ; Léger, 1997). L'un des principaux inconvénients de cette méthode réside dans le fait que la représentation mathématique obtenue n'est pas continument dérivable (c'est-à-dire que la continuité C1 n'est pas vérifiée), propriété bien souvent requise.

Une méthode particulière de compléter des mesures éparses de la géométrie d'une limite de couches consiste, sans avoir à déterminer de représentation mathématique passant par lesdites mesures, à résoudre un problème inverse visant à minimiser les dérivées secondes de la géométrie de la limite de couches en question au niveau des mailles pour lesquelles une mesure est manquante. Cela signifie que l'on va chercher à compléter les mailles vides d'une grille de façon à ce que les dérivées secondes au niveau des mailles complétées soient les plus faibles possibles, ou encore que la rugosité de la géométrie d'une limite de couches soit moindre dans les mailles complétées. Par ailleurs, la minimisation des dérivées secondes, dans le cas d'une grille bidimensionnelle, garantit la continuité C1 du résultat. Cela signifie que la minimisation des dérivées secondes de la géométrie d'une limite de couche dans le cas d'une grille bidimensionnelle permet d'exploiter l'information pendage, connue dans certains groupes de mailles et d'extrapoler cette information en respectant ces pendages connus dans les zones de la grille où les mailles sont vides.

Une méthode classiquement utilisée pour minimiser une fonction objectif composée de dérivées secondes est la méthode du gradient conjugué. Toutefois, une minimisation par gradient conjugué implique généralement, pour que la minimisation soit bien atteinte, que le nombre d'itérations du gradient conjugué soit égal au nombre d'inconnues. Ceci signifie que le gradient conjugué est un algorithme très coûteux en temps de calcul, car le nombre d'inconnues (c'est-à-dire le nombre de mailles vides) pour une limite de couches d'une formation souterraine peut être de l'ordre de la centaine de milliers.

La présente invention concerne un procédé de construction d'un modèle géologique d'une formation souterraine, comprenant une étape d'interpolation/extrapolation de mesures éparses de la géométrie des limites de couches de la formation en question. La méthode d'interpolation/extrapolation selon l'invention est rapide, entièrement automatique, peut permettre d'assurer la continuité des pendages (continuité C1), et ne nécessite pas de représentation mathématique.

## Le procédé selon l'invention

Ainsi, la présente invention concerne un procédé de construction d'un modèle géologique d'une formation souterraine formée d'au moins deux couches sédimentaires, à partir de $N'_0$ mesures de la géométrie des limites desdites

couches, lesdites $N'_0$ mesures d'une dite limite étant réalisées en un nombre $N'_0$ de mailles d'une grille bidimensionnelle $G_0$, ladite grille $G_0$ étant constituée de $N_0$ mailles. Le procédé comporte les étapes suivantes :

- pour chaque limite desdites couches, on détermine ladite géométrie de ladite limite de couches en chaque maille de ladite grille $G_0$ selon au moins les étapes suivantes :

  a) on construit nk grilles $G_k$ à partir de ladite grille $G_0$, chacune des grilles $G_k$, avec k variant de 1 à nk, ayant les mêmes limites spatiales que la grille fine G0, étant plus grossière que la grille Gk-1 et ayant un nombre de mailles inférieur à celui d'une grille $G_{k-1}$ ;
  b) on affecte chacune des grilles $G_k$, telles que k compris entre 1 et nk, par interpolation desdites $N'_0$ mesures de ladite géométrie sur des mailles de ladite grille $G_k$ correspondantes ;
  c) on détermine ladite géométrie de ladite limite de couches en chaque maille de ladite grille $G_0$ en déterminant ladite géométrie de ladite limite de couches en chaque maille de chacune des nk grilles $G_k$, avec k variant de 1 à nk, en appliquant successivement, depuis la grille $G_{nk}$ jusqu'à ladite grille $G_0$, une méthode itérative pour minimiser une fonction objectif dépendante d'une propriété relative à ladite géométrie de ladite limite de couches, et en initialisant chacune des grilles $G_k$, avec k variant de 0 à nk-1, par ladite géométrie de ladite limite de couches déterminée sur la grille $G_{k+1}$ ; et

- à partir de ladite géométrie de chacune desdites limites de couches déterminée en chaque maille de ladite grille $G_0$, on construit ledit modèle géologique.

Selon un mode de mise en œuvre de l'invention, on peut construire lesdites nk grilles $G_k$, avec k variant de 1 à nk, en appliquant un facteur d'échelle *f* successivement nk fois aux pas d'échantillonnage spatial de ladite grille $G_0$.

Selon un autre mode de mise en œuvre de l'invention, ledit facteur d'échelle *f* peut être vectoriel et peut être caractérisé par une valeur scalaire selon chacune des directions du repère de ladite grille $G_0$.

Selon un mode préféré de mise en œuvre de l'invention, ledit facteur d'échelle *f* peut être scalaire.

Préférentiellement, ledit facteur d'échelle *f* peut valoir 2.

Avantageusement, à partir d'un nombre prédéfini d'itérations *Iter* et en faisant l'hypothèse d'un doublement des itérations de ladite méthode itérative d'une grille $G_k$ à une grille $G_{k+1}$, avec k variant 0 à nk, un nombre optimal nk desdites grilles $G_k$ à construire peut être déterminé selon une formule du type :

$$nk = \text{ceiling} \left( log2 \left( \frac{(N0 - N'0)}{Iter} \right) \right),$$

où *ceiling* est une fonction qui associe, à un nombre réel, l'entier immédiatement supérieur.

Selon un mode de réalisation de l'invention, ladite propriété relative à ladite géométrie de ladite limite de couches peut être la continuité des pendages.

Préférentiellement, ladite fonction objectif pour une grille $G_k$, avec k variant de 0 à nk, peut être fonction de la somme des dérivées secondes de ladite propriété calculées au niveau des mailles à compléter de la grille $G_k$ considérée.

De manière très préférée, ladite méthode itérative utilisée pour minimiser ladite fonction objectif peut être la méthode du gradient conjugué.

Selon un mode de réalisation de l'invention, on peut initialiser chaque maille d'une grille $G_k$, avec k variant de 0 à nk-1, à partir d'une interpolation bi-linéaire de ladite géométrie de ladite limite de couches déterminée en chaque maille de la grille $G_{k+1}$.

Selon un mode de réalisation de l'invention, on peut construire ledit modèle géologique en construisant un maillage volumique à partir de chacune desdites limites de couches et en attribuant à chaque maille dudit maillage volumique au moins une valeur d'une propriété pétrophysique représentative de ladite formation.

Préférentiellement, on peut prendre en compte la présence de failles en annulant la valeur des dérivées secondes au niveau desdites failles.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en œuvre du procédé selon l'une des revendications précédentes, lorsque ledit programme est exécuté sur un ordinateur.

On peut définir un procédé d'exploitation d'une formation souterraine en réalisant les étapes suivantes :

- on construit un modèle géologique de ladite formation au moyen du procédé de construction d'un modèle géologique selon l'invention ;

- on détermine un schéma d'exploitation optimal du réservoir à partir dudit modèle ;

- on exploite ledit réservoir en mettant en œuvre ledit schéma d'exploitation optimal.

**Présentation succincte des Figures**

D'autres caractéristiques et avantages du procédé selon l'invention, apparaîtront à la lecture de la description ci-après d'exemples non limitatifs de réalisations, en se référant aux figures annexées et décrites ci-après.

La Figure 1 illustre un mode de réalisation de la présente invention visant à repositionner une faille réelle à partir d'une interpolation/extrapolation réalisée selon le procédé selon l'invention appliqué en faisant l'hypothèse d'une faille verticale.

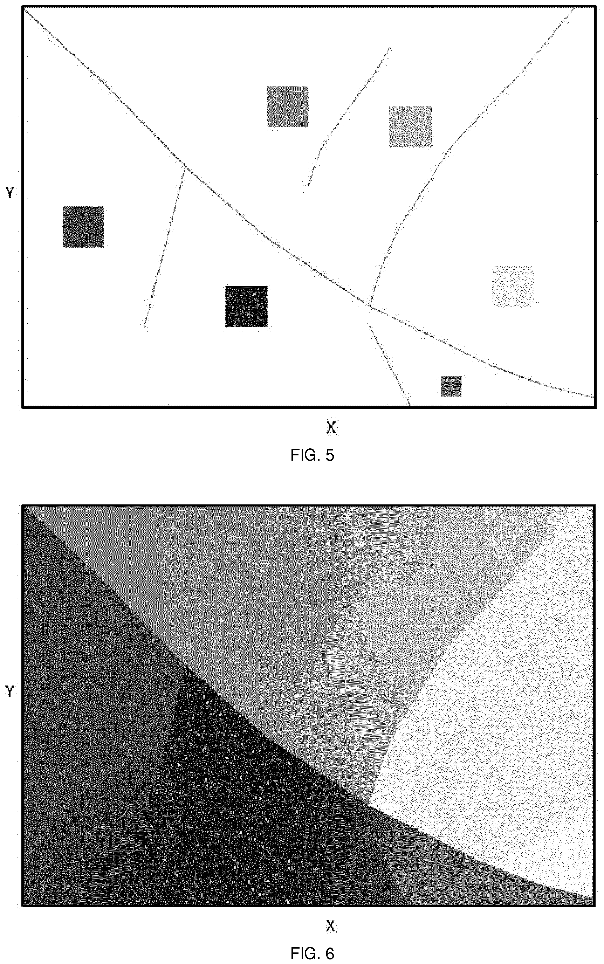

La Figure 2 montre l'emplacement de $N'_0$ mesures (carrés grisés) de la géométrie d'une limite de couches d'une formation souterraine donnée, réalisées sur une grille fine constituée de 700 mailles dans la direction X et 700 mailles dans la direction Y. La palette de couleur présentée sur cette Figure est aussi utilisée pour les Figures 3 à 6.

La Figure 3 présente le résultat de l'étape d'initialisation 1.3.1) pour une grille grossière $G_4$, constituée de 256 fois moins de mailles que la grille fine $G_0$.

Les Figures 4A à 4E présentent la géométrie d'une limite de couches complétée, obtenue respectivement pour des grilles $G_4$ à $G_0$, au cours de l'application du procédé selon l'invention.

La Figure 5 présente la position de $N'_0$ mesures (carrés grisés) de la géométrie d'une limite de couches d'une formation donnée par rapport à la position de cinq plans de failles caractérisant cette formation (lignes courbes).

La Figure 6 présente le résultat de l'application du procédé selon l'invention, mis en oeuvre en prenant en compte les failles présentées en Figure 5.

**Description détaillée du procédé**

Les définitions suivantes sont utilisées au cours de la description de l'invention :

- *Limite de couches géologiques :* on appelle limite de couches géologiques la surface bidimensionnelle à l'interface entre deux couches géologiques. La limite de deux couches géologiques correspond au toit de l'une des couches et à la base (aussi connue sous le terme de « mur ») de l'autre. Une limite de couches géologiques d'une formation souterraine sous-entend que la formation souterraine comprend au moins deux couches géologiques ;

- *Géométrie de limites de couches :* on appelle géométrie de limites de couches à la fois les côtes et les variations latérales de côtes d'une limite de couches, lesdites côtes pouvant être des profondeurs (dans le cas d'une image sismique profondeur) ou bien des temps (dans le cas d'une image sismique temps) ;

- *Grille fine :* on appelle grille fine la grille bidimensionnelle d'intérêt, c'est-à-dire la grille sur laquelle on souhaite avoir, en chaque maille, la géométrie d'une limite de couches donnée. La grille fine est définie par un pas d'échantillonnage selon chacun de ses axes. Cette grille est notée $G_0$ par la suite ;

- *Grille grossière :* on appelle grille grossière une version grossie de la grille fine d'intérêt. Une grille grossière a les mêmes limites spatiales que la grille fine d'intérêt, mais est caractérisée par au moins un pas d'échantillonnage dans une direction supérieur au pas d'échantillonnage correspondant de la grille fine $G_0$ Une grille grossière comporte donc un nombre de mailles inférieur au nombre de mailles de la grille fine. Une grille grossière est notée $G_k$, avec k>0, par la suite.

La présente invention concerne un procédé de construction d'un modèle géologique d'une formation souterraine comprenant au moins une limite de couches géologiques, basée sur une alternative aux méthodes connues d'interpolation/extrapolation de géométrie de mesures incomplètes de limites de couches géologiques sur une grille donnée, impliquant une succession de grilles de plus en plus grossières construites à partir de la grille d'intérêt, et dans laquelle, en partant de la grille la plus grossière jusqu'à la grille d'intérêt, on complète la géométrie des limites de chaque couche considérée, en résolvant un problème inverse initialisé par le résultat obtenu pour la grille plus grossière précédente.

Ainsi, la présente invention exploite le fait qu'un problème inverse, s'il est initialisé par une bonne approximation du résultat, converge rapidement (c'est-à-dire selon un nombre d'itérations moins grand que le nombre de mailles vides), et, qui plus est, vers une solution acceptable pour l'homme du métier. L'initialisation selon l'invention consiste à utiliser le résultat d'une optimisation sur une grille grossière, avec un nombre d'itérations suffisant pour garantir la convergence. Le nombre de mailles de la grille grossière étant moins grand que le nombre de mailles de la grille d'intérêt, même si on réalise plus d'itérations sur la grille grossière que sur la grille fine, le coût global du processus (temps de calcul) est abaissé. Ce raisonnement peut être tenu de proche en proche, en considérant nk versions de plus en plus grossières de la grille d'intérêt. La grille $G_{nk}$ ayant un nombre de mailles restreint, on peut se permettre de résoudre le problème inverse avec autant d'itérations que nécessaire, et le résultat obtenu sert alors à initialiser de façon *ad hoc* le problème inverse pour la grille moins grossière suivante $G_{nk-1}$, et ainsi de suite.

La présente invention requiert de disposer de mesures de la géométrie d'au moins une limite de couches géologiques d'une formation souterraine. Préalablement à la mise en œuvre du procédé selon l'invention, on peut avoir recours aux étapes suivantes afin d'acquérir des mesures de la géométrie d'au moins une limite de couches géologiques :

- Acquisition de données sismiques ;

- Traitement des données sismiques acquises ;

- Interprétation de l'image sismique résultant du traitement des données sismiques acquises.

L'étape d'acquisition des données sismiques met généralement en œuvre le principe de la sismique réflexion. La sismique réflexion consiste à émettre une onde ou plusieurs ondes (par explosif ou vibration en sismique terrestre, par canon à air ou à eau en sismique marine) et à enregistrer les signaux représentant les variations d'amplitude des ondes s'étant propagées dans l'eau ou le sous-sol, et s'étant au moins partiellement réfléchies au niveau d'au moins une limite (appelée aussi interface) de couche géologique caractérisée par un contraste d'impédance sismique. L'enregistrement des ondes s'étant ainsi réfléchies est effectué par des capteurs d'accélération (sismomètres), de vibration (géophones) ou de pression (hydrophones), ou par une combinaison de capteurs élémentaires des types précédents (par exemple des capteurs multi-composantes ou des OBC ("Océan Bottom Cable")) localisés à des positions géographiques données. Le signal enregistré, typiquement pendant quelques secondes, par un capteur donné est appelé trace sismique. Les données sismiques correspondent à une collection d'une ou plusieurs traces sismiques, issues de capteurs localisés à différentes positions spatiales, formant un volume en deux ou trois dimensions (une de temps, une ou deux d'espace), voire en quatre dimensions si l'on inclut des acquisitions sismiques répétitives (acquises dans une même région à différentes périodes temporelles). La distance entre une source et un capteur sismiques est appelée déport (ou "offset" en anglais). Les données sismiques enregistrées au cours d'une expérience de sismique réflexion sont dites multi-déports ou encore avant sommation ("prestack" en anglais), c'est-à-dire que le signal émis par une source donnée est enregistré par plusieurs capteurs situés à différents déports.

Les données sismiques enregistrées, dites brutes, sont bien souvent inexploitables. Suivant la qualité et les caractéristiques des données enregistrées, sont appliquées différentes étapes de traitement sismique, telles que les corrections d'amplitudes, la déconvolution, les corrections statiques, le filtrage du bruit (aléatoire ou cohérent), la correction NMO (« Normal Move Out » en anglais, « Courbure Normale » en français), le stack (« sommation » en français, conduisant à une section à déport nul ou après sommation des données sismiques avant sommation), ou encore la migration. Ces étapes de traitement, nécessitant des calculs souvent très complexes et très longs, sont réalisées sur ordinateur. Les données sismiques résultantes sont alors appelées image sismique. Ces images sismiques sont le plus souvent représentées sur un ordinateur, par un maillage ou grille tridimensionnelle, chaque maille correspondant à une position latérale et verticale (la direction verticale correspondant au temps ou à la profondeur selon que le traitement a abouti à une image temps ou à une image profondeur) au sein de la formation étudiée, et étant caractérisée par une amplitude sismique. Si le traitement sismique appliqué aux données sismiques enregistrées est optimal, l'amplitude sismique en une maille donnée d'une image sismique doit refléter l'amplitude de l'onde sismique ayant subi une unique réflexion (dite réflexion primaire) à la position de la maille considérée dans la formation étudiée.

Les images sismiques issues de ce traitement sont ensuite utilisées pour réaliser une interprétation sismique. Ces interprétations sont généralement conduites par un géologue ou bien un géophysicien. Une interprétation de données sismiques vise à déterminer les caractéristiques de la formation étudiée, notamment en termes de positionnement et de géométrie des limites de couches géologiques et des failles de la formation (on parle d'interprétation structurale), mais aussi en termes d'amplitudes sismiques, qui informent sur les propriétés pétro-physiques de la formation étudiée (on parle d'interprétation lithologique). Dans le cas de l'interprétation structurale, le spécialiste identifie les principales limites de couches (en s'aidant par exemple d'informations relevées aux puits), puis va « suivre » latéralement les limites de couches identifiées (on parle aussi d'horizons sismiques) dans toute l'image sismique, maille après maille. Cette phase d'interprétation est généralement réalisée sur ordinateur, à l'aide d'un logiciel d'interprétation sismique (par exemple à l'aide du logiciel Charisma ®, Schlumberger (France)), et conduit à une mesure de la profondeur ou du temps de la limite de couches en question en des mailles d'une grille bidimensionnelle dont le repère est orienté selon les axes horizontaux de l'image sismique. Bien souvent, les données sismiques étant bruitées, le nombre de mesures de la géométrie d'une limite de couches est inférieur au nombre de mailles de la grille en question.

Au cours de cette description, on considère que l'on dispose de $N'_0$ mesures de la géométrie d'au moins une limite de couches d'une formation souterraine, les $N'_0$ mesures ayant été réalisées en un nombre $N'_0$ de mailles d'une grille fine $G_0$ constituée de $N_0$ mailles.

La présente invention comporte alors au moins les étapes suivantes :

1) détermination de la géométrie de chaque limite de couches, avec application, pour chaque limite de couches, des étapes suivantes :

1.1) construction de nk grilles grossières
1.2) affectation des nk grilles grossières
1.3) détermination emboîtée de la géométrie d'une limite de couches

1.3.1) initialisation de chaque problème inverse
1.3.2) résolution de chaque problème inverse

2) construction du modèle géologique

Les principales étapes du procédé selon l'invention sont détaillées ci-après.

**1) Détermination de la géométrie de chaque limite de couches**

Au cours de cette étape, il s'agit de déterminer la géométrie de chaque limite de couches de la formation étudiée en chaque maille de la grille d'intérêt. On décrit ci-après les étapes 1.1) à 1.3) à appliquer pour chaque limite de couches de la formation étudiée.

On rappelle que les mesures de la géométrie d'une limite de couches peuvent être obtenues par une interprétation de données sismiques, elles-mêmes pouvant être issues d'une campagne d'acquisition sismique puis d'une étape de traitement des données sismiques acquises.

**1.1) Construction de nk grilles grossières**

Au cours de cette étape, il s'agit de construire un nombre nk prédéterminé de versions grossières $G_k$ de la grille fine $G_0$, avec k variant de 1 à nk. Une grille grossière $G_k$ a les mêmes limites spatiales que la grille fine $G_0$, mais est caractérisée par un nombre de mailles inférieur.

Selon un mode de réalisation de la présente invention, on construit nk versions grossières $G_k$ de la grille fine $G_0$ en appliquant successivement nk fois un facteur d'échelle $f$ aux pas d'échantillonnage spatial de la grille fine $G_0$

Selon un mode particulier de mise en œuvre de la présente invention, le facteur d'échelle $f$ est vectoriel et est caractérisé par une valeur scalaire propre à chaque axe du repère de la grille. Ainsi, on peut appliquer une valeur de facteur d'échelle différente suivant la direction considérée.

Selon un mode préféré de mise en œuvre de la présente invention, le facteur d'échelle $f$ est scalaire.

Très préférentiellement, on choisit un facteur d'échelle scalaire et égal à 2. Ainsi, une grille grossière $G_k$, avec k variant de 1 à nk, est un grossissement par un facteur 2 de la grille $G_{k-1}$, et est un grossissement par un facteur $2^k$ de la grille fine $G_0$.

Selon un mode de réalisation dans lequel le facteur d'échelle est un scalaire et vaut 2, un spécialiste peut définir un nombre d'itérations $Iter$ d'un algorithme de minimisation à réaliser pour minimiser ladite fonction objectif sur la grille fine $G_0$, ainsi qu'un doublement du nombre d'itérations à réaliser par cet algorithme de minimisation d'une grille à une autre. Un nombre optimal nk desdites grilles grossières $G_k$ à construire, avec k > 0, peut alors être déterminé selon une formule du type :

$$ nk = ceiling\left( \log_2 \left( \frac{(N_0 - N_0^{'})}{Iter} \right) / 3 \right) \qquad (1) $$

où $ceiling$ est une fonction qui associe, à un nombre réel, l'entier immédiatement supérieur.

**1.2) Affectation des nk grilles grossières**

Au cours de cette étape et pour une grille grossière $G_k$ donnée, avec k variant de 1 à nk, il s'agit d'attribuer une valeur de géométrie aux mailles de la grille grossière $G_k$ qui correspondent à au moins une maille de la grille fine $G_0$ pour lesquelles une mesure a été effectuée. Par maille correspondante, on entend la maille de la grille $G_k$ qui contient le centre de gravité de la maille de la grille $G_0$ considérée.

Plus précisément, pour une grille grossière $G_k$ donnée, avec k variant de 1 à nk, on interpole, *stricto sensu*, lesdites $N'_0$ mesures de ladite géométrie sur chacune des mailles de la grille grossière $G_k$ correspondante Il ne s'agit donc pas là de compléter toutes les mailles des grilles grossières, mais simplement de transposer, sur chacune des grilles grossières $G_k$, les mesures réalisées sur la grille fine $G_0$.

Selon un mode de mise en œuvre de la présente invention, on attribue à une maille d'une grille $G_k$ donnée, avec k variant de 1 à nk, la valeur de la moyenne des mesures réalisées sur les mailles de la grille $G_0$ dont le centre de gravité est contenu dans la maille de la grille $G_k$ considérée.

Selon un mode de mise en œuvre de la présente invention, pour chaque maille d'une grille grossière $G_k$ donnée, avec k variant de 1 à nk, on considère huit secteurs angulaires définis à partir du centre de gravité de la maille considérée. Puis, pour chaque secteur angulaire, on regarde s'il existe au moins, dans le secteur considéré, trois mesures réalisées sur le maillage fin $G_0$, et on calcule alors une valeur moyenne de la géométrie pour ce secteur angulaire. Puis on calcule la moyenne des valeurs ainsi obtenues pour chaque secteur, et on attribue cette moyenne à la maille de la grille $G_k$ considérée. De cette façon, la valeur attribuée à une maille de la grille $G_k$, avec k variant de 1 à nk, respecte les pendages résultant des mesures sur les mailles correspondantes de la grille fine $G_0$

**1.3) Détermination emboitée de la géométrie d'une limite de couches**

Au cours de cette étape, il s'agit, en partant depuis la grille la plus grossière $G_{nk}$ jusqu'à la grille fine d'intérêt $G_0$, de déterminer, de façon successive, la géométrie de la limite de couches considérée en chaque maille de chacune des grilles, et ce, en initialisant le problème inverse propre à chaque grille par la géométrie de la couche déterminée sur la grille moins grossière précédente. Le problème inverse considéré dans la présente invention vise, pour chaque grille considérée, à minimiser une fonction objectif dépendant d'une propriété attendue de la géométrie de la limite de couches considérée dans les mailles vides de cette grille.

**1.3.1) Initialisation de chaque problème inverse**

La minimisation d'une fonction objectif est un processus itératif qui requiert une initialisation des quantités recherchées. On initialise une grille $G_k$, avec k variant de 0 à nk-1, à partir des valeurs de la grille $G_{k+1}$ complétée. On peut par exemple initialiser une grille $G_k$, avec k variant de 0 à nk-1, par une interpolation bilinéaire des valeurs de la grille $G_{k+1}$ complétée. Lorsque k vaut nk, on initialise la grille $G_{nk}$ à partir, par exemple, d'une régression linéaire sur le résultat de l'étape d'affectation décrite précédemment en section 1.2).

De cette façon, on cherche à compléter les mailles vides d'une grille $G_k$, avec k variant de 0 à nk, en tenant compte du résultat obtenu sur une grille plus grossière précédente. En procédant de proche en proche, d'une grille plus grossière à une grille moins grossière, et ce jusqu'à la grille fine d'intérêt $G_0$, le problème inverse est bien posé, et une solution peut avantageusement être trouvée en un nombre d'itérations réduit.

**1.3.2) Résolution de chaque problème inverse**

Pour une grille $G_k$ donnée, avec k variant de 0 à nk-1, le procédé selon l'invention vise à minimiser une fonction objectif dépendant d'une propriété attendue de la géométrie de la limite de couches considérée dans les mailles vides de la grille considérée. La propriété en question peut être déduite des caractéristiques de la géométrie de la limite de couches considérée dans les mailles pour lesquelles une mesure de la géométrie est connue (par mesure directe sur la grille fine $G_0$, ou après l'étape d'affectation décrite précédemment à la section 1.2 pour une grille grossière $G_k$ telle que k varie de 1 à nk).

Selon un mode préféré de mise en œuvre de la présente invention, on complète les mailles d'une grille $G_k$, avec k variant de 0 à nk, de façon à préserver, dans les mailles vides de cette grille, la continuité des pendages mesurés (continuité C1). Préférentiellement, on détermine une valeur de la géométrie d'une limite de couches en chaque maille vide d'une grille par minimisation des dérivées secondes calculées au niveau des mailles vides de cette grille.

Selon un mode de réalisation de la présente invention, la fonction objectif est composée de la somme pondérée des dérivées secondes de la géométrie de la limite de couches en chaque maille vide *(i,j)* d'une grille $G_k$, les mailles

vides étant au nombre de $N_k^{''} = N_k - N_k^{'}$, avec k pouvant varier de 0 à nk. Cela signifie que l'on cherche à déterminer des valeurs de la géométrie de la limite de couches en les mailles de la grille pour lesquelles une valeur est manquante, telles que les valeurs calculées engendrent des dérivées secondes minimales. Autrement dit, on cherche à combler une grille éparse par des valeurs garantissant une faible rugosité de la grille finale. La fonction objectif discrète à minimiser peut alors s'écrire :

$$F = \sum_{N_k^{''}} \varepsilon_{ij}^{D_{2i}} D_{2i}(i, j) + \sum_{N_k^{''}} \varepsilon_{ij}^{D_{2ij}} D_{2ij}(i, j) + \sum_{N_k^{''}} \varepsilon_{ij}^{D_{2j}} D_{2j}(i, j) \,,$$

avec

$$D_{2i}(i, j) = m_{i-1,j} - 2m_{i,j} + m_{i+1,j} \,,$$

$$D_{2ij}(i, j) = m_{i,j} - m_{i+1,j} - m_{i,j-1} + m_{i+1,j+1} \,,$$

et

$$D_{2j}(i, j) = m_{i,j-1} - 2m_{i,j} + m_{i,j+1} \,,$$

où $m_{i,j}$ est une mesure de la géométrie de la limite de couches considéré en la maille $(i,j)$, $\varepsilon_{i,j}^{D_{2i}}$, $\varepsilon_{i,j}^{D_{2j}}$, et $\varepsilon_{i,j}^{D_{ij}}$ sont les poids à la maille $(i,j)$ pour une dérivée d'ordre 2. Selon un mode de réalisation de la présente invention, les poids sont indépendants de la maille $(i,j)$. Selon un mode de réalisation dans lequel le facteur d'échelle $f$ est scalaire et vaut 2, les pas d'échantillonnage d'une grille $G_k$ étant alors définis par $p_i^k = p_i^0 2^k$ et $p_j^k = p_j^0 2^k$, on peut définir les poids en la maille $(i,j)$ par $\varepsilon_{i,j}^{D2i} = p_j^k/(p_i^k)^3$, $\varepsilon_{i,j}^{D2j} = p_i^k/(p_j^k)^3$, et $\varepsilon_{i,j}^{Dij} = 1/(p_i^k p_j^k)$.

La fonction objectif ainsi définie étant non linéaire, on a recours à une méthode de minimisation basée sur une approche itérative. Plus précisément, cela signifie que l'on utilise une méthode qui, à partir d'une fonction objectif calculée sur un modèle initial (ici les mesures en les mailles vides), va modifier ce modèle, itération après itération, jusqu'à trouver un minimum de la fonction objectif. De nombreux algorithmes de minimisation de fonction objectif sont connus du spécialiste, tels que la méthode de Gauss-Newton, la méthode de Newton-Raphson ou encore le gradient conjugué. Selon un mode de réalisation préféré de la présente invention, on utilise la méthode du gradient conjugué comme algorithme de minimisation de la fonction objectif $F$ précédemment décrite.

L'utilisation de l'équation (1) (définie à l'étape 1.1 pour la détermination du nombre nk) garantit que le nombre d'itérations sur la grille la plus grossière $G_{nk}$ est au moins supérieur au nombre de mailles vides sur cette grille grossière $G_{nk}$, ce qui assure la minimisation de la fonction objectif pour cette grille grossière. A partir du résultat optimal sur la grille grossière $G_{nk}$, on peut alors initialiser de façon optimale la grille grossière suivante $G_{nk-1}$, et ainsi de proche en proche, jusqu'à atteindre la grille fine d'intérêt $G_0$.

## 2) Construction d'un modèle géologique

Au cours de cette étape, il s'agit de construire un modèle géologique de la formation souterraine considérée à partir de la géométrie de chacune des limites de couches complétée pour chaque maille de la grille fine $G_0$ selon les étapes 1.1) à 1.3) précédemment décrites. Ainsi, les limites de couches peuvent être considérées comme le « squelette » du modèle géologique, et il convient alors de construire, à partir de ce « squelette », un volume. Préférentiellement, le volume en question est construit sous la forme d'un maillage tridimensionnel, et on attribue à chacune des mailles de ce maillage tridimensionnel au moins une propriété pétrophysique représentative de la formation considérée. Le maillage volumique peut avoir les mêmes limites latérales que la grille bidimensionnelle considérée.

Dans le cas de la construction du modèle géologique pour l'inversion stratigraphique telle que réalisée dans le logiciel Interwell ® (IFP Energies nouvelles, France), on réalise les étapes suivantes :

- On complète chaque limite de couches de la formation étudiée en chacune des mailles de la grille considérée selon les étapes décrites en section 1) ;
- A partir des limites de couches ainsi complétées, on définit des unités géologiques (c'est-à-dire des ensembles de mailles du maillage volumique correspondant à un même événement géologique, tels que le dépôt d'une couche sédimentaire donnée), ainsi que le mode de dépôt à l'intérieur de chacune de ces unités géologiques (dépôt parallèle au toit ou à la base de la couche, ou concordant). Le feuilletage à l'intérieur des unités est alors défini ;
- On construit un cube des âges, c'est-à-dire un cube dont les iso-valeurs sont les isochrones de sédimentation (voir par exemple Wheeler (1958) pour des détails sur la chrono-stratigraphie) ;
- Pour chaque unité géologique, on interpole les valeurs de propriétés pétrophysiques connues aux puits (par exemple les impédances des ondes sismiques P et S, les densités, des scalaires identifiant les différents faciès) le long de ces isochrones de sédimentation. Chaque maille d'une unité géologique contient alors des propriétés pétrophysiques, et le maillage volumique est construit.

Des informations supplémentaires sur la construction d'un modèle géologique pour l'inversion stratigraphique telle que réalisée dans le logiciel Interwell ® pourront être trouvées dans le brevet EP 0889331 A1 (US 6374201 B1).

### Variantes

### Prise en compte de failles

Selon un mode de réalisation de la présente invention, la formation souterraine d'intérêt comporte au moins une limite de couches sédimentaires, et les couches sont interceptées par au moins une faille. En géologie, une faille est une déformation consistant en un plan le long duquel deux blocs rocheux se déplacent l'un par rapport à l'autre. Ce plan divise un volume rocheux en deux compartiments qui ont glissé l'un par rapport à l'autre. Ainsi une limite de couches sédimentaires intersectée par une faille active se voit découpée, chaque morceau étant décalé d'une distance, appelée rejet, l'un par rapport à l'autre. Il est bien évident que le critère de continuité des pendages n'a pas de sens au niveau d'une faille, ou autrement dit, il est bien évident que l'on doit compléter une limite de couches en respectant les pendages jusqu'aux mailles intersectées par les failles, et non pas au travers des failles.

Selon un mode particulier de mise en œuvre de la présente invention, la faille est prise en compte en considérant un rejet purement vertical. On peut dans ce cas faire passer le plan de la faille verticale approximée par le milieu du plan de de la faille réelle. Préférentiellement, dans le cas d'une détermination de la géométrie d'une limite de couches par minimisation des dérivées secondes (voir l'étape 1.3.2) décrite précédemment), on annule les dérivées secondes en les mailles des grilles $G_k$, avec k variant de 0 à nk, traversées par la faille verticale en question.

Selon un mode de réalisation de la présente invention, pour chaque grille $G_k$, avec k variant de 0 à nk, on adapte l'étape d'initialisation de chaque problème inverse décrite en section 1.3.1), afin d'initialiser chacune des mailles vides localisées près d'une faille. En effet, une faille introduisant un décrochement selon l'axe vertical, il est préférable, afin d'initialiser au mieux une maille vide située près d'une faille, de ne prendre en compte que les points situés du même côté de la faille que la maille vide en question. Ainsi, préférentiellement, on initialise une maille vide en extrapolant les mesures des mailles proches de la maille vide et situées du même côté de la faille, au lieu par exemple de l'initialiser par une interpolation prenant en compte des mailles situées de part et d'autre de la faille.

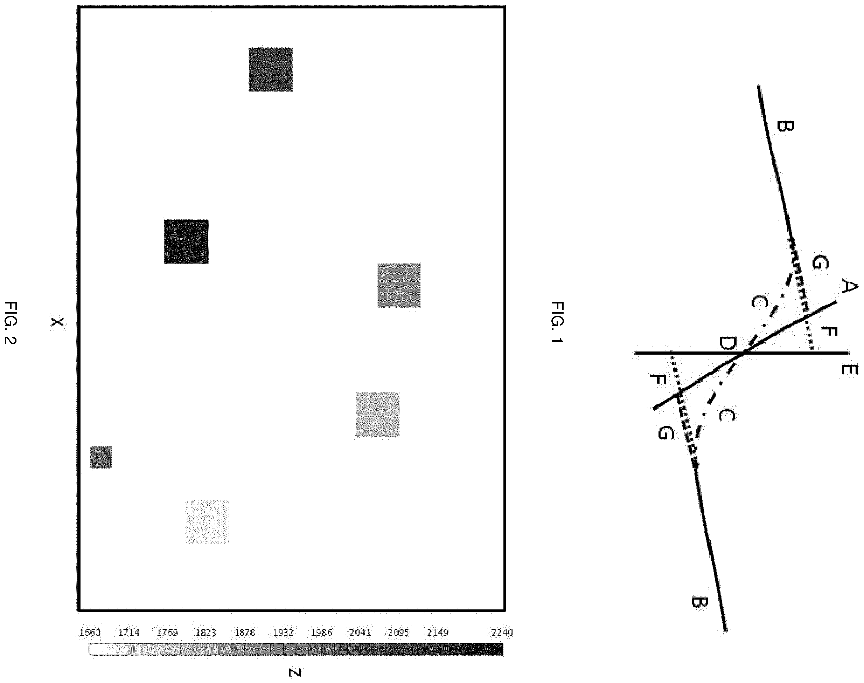

Selon un mode de réalisation de la présente invention, une fois la géométrie de la limite de couches complétée en considérant une faille approximée par une faille verticale, on peut repositionner la faille réelle de manière automatique. Pour ce faire, dans le cas d'une faille normale, en plus de l'application du procédé selon l'invention avec prise en compte de failles telle que décrit précédemment, on détermine, par le procédé selon l'invention, la géométrie de la limite de couches étudiée sans considérer de faille. Puis par comparaison entre les deux résultats, on replace la faille, en éliminant les valeurs de géométrie déterminées entre la faille verticale et la faille réelle. La Figure 1 présente le principe de cette reconstruction. Cette figure montre une faille verticale E, qui est une approximation verticale de la faille réelle A ; B est une partie d'une limite de couches éloignée de la faille ; C est l'interpolation de cette limite de couches (en tiret-pointillé), sans la faille ; D est l'intersection de la faille réelle A et de la surface C ; E est la faille verticale passant par D ; et F est l'interpolation en pointillé de la surface B avec la faille verticale E. Et enfin, G présente la restriction (en tirets) de la surface F, afin de respecter la faille réelle A.

### Procédé d'exploitation

En outre, l'invention concerne un procédé d'exploitation d'une formation souterraine comprenant au moins un réservoir, dans lequel on réalise les étapes suivantes :

- on construit un modèle géologique représentatif de la distribution d'au moins une propriété pétrophysique au moyen du procédé de construction de modèle géologique tel que précédemment décrit;

- on détermine un schéma d'exploitation optimal dudit réservoir de ladite formation souterraine à partir dudit modèle ;

- on exploite ledit réservoir en mettant en œuvre ledit schéma d'exploitation optimal.

A partir du modèle géologique obtenu lors des étapes précédentes, les spécialistes peuvent déterminer plusieurs schémas d'exploitation correspondant à différentes configurations possibles d'exploitation du réservoir souterrain : emplacement des puits producteurs et/ou injecteurs, valeurs cibles pour les débits par puits et/ou pour le réservoir, le type d'outils utilisés, les fluides utilisés, injectés et/ou récupérés, etc. Pour chacun de ces schémas, il convient de déterminer leurs prévisions de production. Ces prévisions de production probabilistes peuvent être obtenues au moyen d'un logiciel de simulation d'écoulement ainsi qu'au moyen du modèle numérique de réservoir calé. Une simulation de réservoir est une technique permettant de simuler les écoulements de fluides au sein d'un réservoir au moyen d'un logiciel appelé simulateur d'écoulement, et du modèle de réservoir. Par exemple, le logiciel PumaFlow ® (IFP Énergies nouvelles, France) est un simulateur d'écoulement.

A partir des prévisions de productions probabilistes définies pour chaque schéma d'exploitation, les spécialistes peuvent par comparaison choisir le schéma d'exploitation qui leur semble le plus pertinent. Par exemple :

- en comparant le maximum du volume d'huile récupéré, on peut déterminer le schéma de production susceptible de fournir le maximum de récupération ou d'être le plus rentable ;

- en comparant l'écart type du volume d'huile récupéré, on peut déterminer le schéma de production le moins risqué.

On exploite alors le réservoir de la formation étudiée selon le schéma d'exploitation défini par exemple en forant de nouveaux puits (producteur ou injecteur), en modifiant les outils utilisés, en modifiant les débits et/ou la nature de fluides injectés, etc.

### Programme d'ordinateur

L'invention concerne, par ailleurs, un produit programme d'ordinateur téléchargeable depuis un réseau de communication et/ou enregistré sur un support lisible par ordinateur et/ou exécutable par un processeur. Ce programme comprend des instructions de code de programme pour la mise en œuvre du procédé tel que décrit ci-dessus, lorsque le programme est exécuté sur un ordinateur.

### Exemples d'application

Les caractéristiques et avantages du procédé selon l'invention apparaîtront plus clairement à la lecture des exemples d'application ci-après.

### Exemple 1 : cas sans failles

Dans cet exemple, on considère une formation souterraine présentant une seule limite de couches. On dispose de mesures éparses de la géométrie de cette limite de couches sur une grille fine $G_0$ formée de 500 par 700 mailles, soit un nombre $N_0$ de mailles de 350000. Pour cet exemple illustratif, on va considérer un nombre de mailles vides $N"_0$ de 340000. Afin de compléter les mailles vides de la grille d'intérêt, on choisit de résoudre, par la méthode du gradient conjugué, un problème inverse basé sur la minimisation des dérivées secondes tel que décrit à l'étape 1.3.2) précédente.

La Figure 2 montre, par des carrés plus ou moins grisés, les $N'_0$ mesures de la géométrie de la limite de couches considérée réalisées sur la grille fine $G_0$. On peut ainsi observer que les 10000 mesures de la géométrie ont été réalisées dans six zones bien distinctes et que la profondeur mesurée varie entre 1700 et 2200m.

En théorie, si l'on choisissait de compléter la grille d'intérêt sans recourir à la résolution de problèmes intermédiaires sur des grilles grossières telle que selon l'invention, le problème inverse de la grille fine ayant 340000 inconnues, il faudrait réaliser au moins 340000 itérations de gradient conjugué, ce qui est extrêmement coûteux en temps de calcul.

On choisit d'appliquer le procédé selon l'invention en utilisant un facteur d'échelle f scalaire valant 2. Ainsi, une grille grossière $G_k$, avec k variant de 1 à nk, est un grossissement par un facteur 2 de la grille $G_{k-1}$. Afin de choisir de façon optimale le nombre nk de grilles grossières à considérer, on utilise l'équation (1) précédemment décrite. On choisit un nombre Iter=100 d'itérations à réaliser pour résoudre le problème inverse sur la grille fine, ce qui est très largement inférieur aux 340000 itérations requises sans avoir recours au procédé selon l'invention. Et on décide de doubler les itérations d'une grille à une autre. On obtient alors, selon la formule (1), un nombre nk=4, soit 4 grilles grossières. Ainsi, la grille grossière $G_1$ est caractérisée par 4 fois moins de mailles que la grille $G_0$, soit environ 85000 mailles vides, la grille $G_2$ par 16 fois moins, soit 21000 mailles vides, la grille $G_3$ par 64 fois moins de mailles, soit environ 5300 mailles vides, et la grille $G_4$ par 256 fois moins de mailles, soit environ 1300 mailles vides (voir la colonne de droite du Tableau 1). On peut donc constater que le nombre d'inconnues pour la grille la plus grossière $G_4$ est très réduit. De plus, en doublant les itérations de gradient conjugué d'une grille à une autre (voir la colonne du milieu du Tableau 1), on constate que le nombre d'itérations de gradient conjugué pour la grille la plus grossière $G_4$ est supérieur au nombre d'inconnues pour cette grille, soit 1600 itérations contre 1300 inconnues. On est donc assuré que le gradient conjugué converge complètement pour la grille $G_4$, ce qui va permettre de correctement initialiser la grille $G_3$ et ainsi d'obtenir un résultat sur $G_3$ satisfaisant, et ce, sans avoir à effectuer 5300 itérations de gradient conjugué mais seulement 800 (voir la colonne du milieu du Tableau 1). Et ainsi de suite jusqu'à la grille $G_0$, qui, correctement initialisée par le résultat sur la grille $G_1$, après 200 itérations, ne nécessitera que 100 itérations pour compléter 340000 mailles vides.

Tableau 1

| Numéro de la grille | Nombre d'itérations | Nombre de mailles vides |
|---|---|---|
| $G_4$ | 1600 | 1300 |
| $G_3$ | 800 | 5300 |
| $G_2$ | 400 | 21000 |
| $G_1$ | 200 | 85000 |
| $G_0$ | 100 | 340000 |

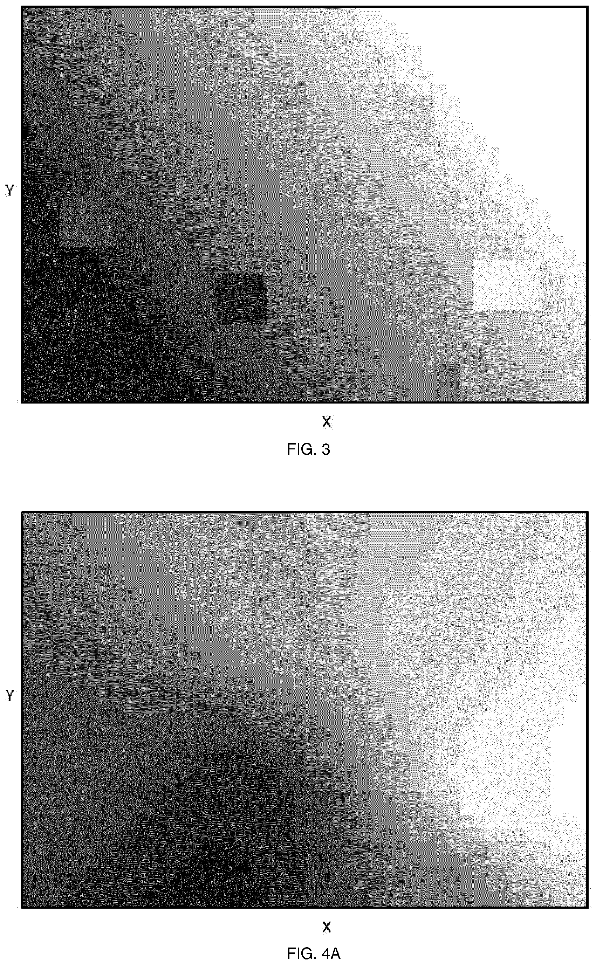

La Figure 3 présente le résultat de l'étape d'initialisation décrite en section 1.3.1) de la grille grossière $G_4$, réalisée à partir du résultat de l'étape d'affectation décrite en section 1.2). Sur cette Figure, on a également superposé, à titre informatif, lesdites mesures résultant de cette étape d'affectation. La grille grossière $G_4$ est une grille grossie 16 fois par rapport à la grille fine $G_0$.

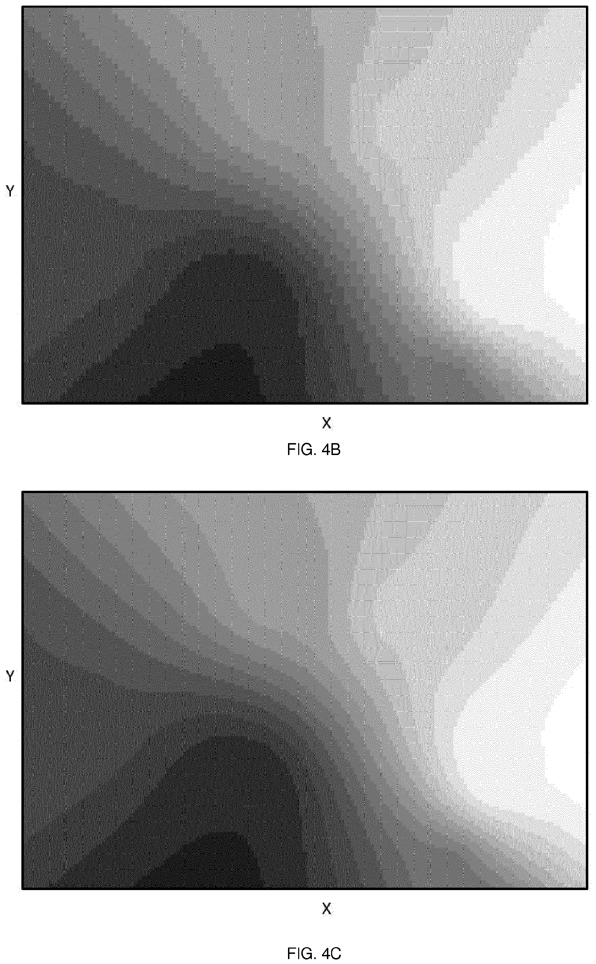

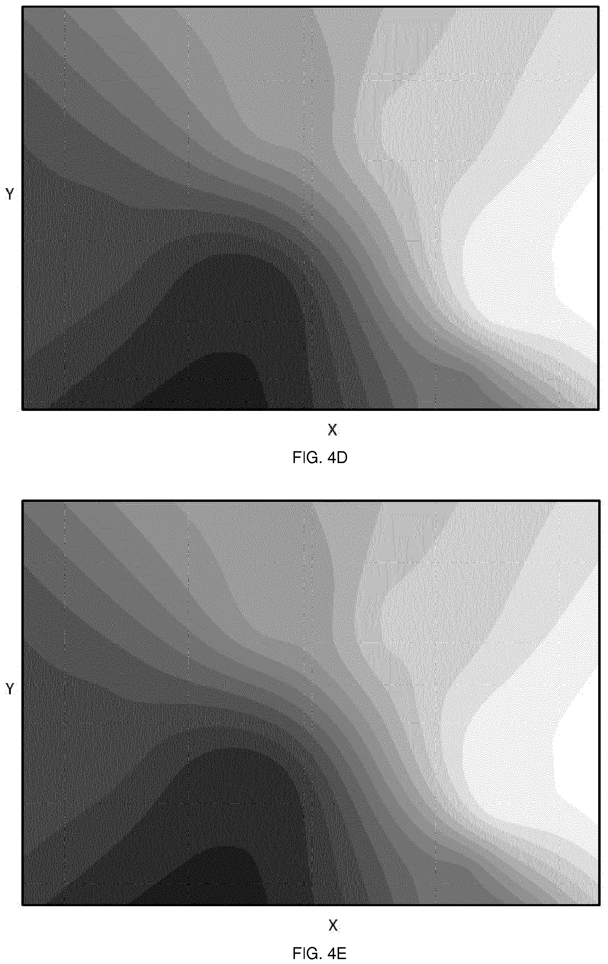

Les Figures 4A à 4D présentent, pour la limite de couches étudiée, le résultat de l'étape 1.3.2) appliquée respectivement pour les grilles intermédiaires $G_4$ à $G_1$, c'est-à-dire pour des grilles de plus en plus fines. Le résultat final du procédé selon l'invention, sur la grille fine $G_0$, est lui présenté en Figure 4E. On observe sur ces Figures que les grandes tendances de la géométrie de la limite de couches étudiée étaient déjà présentes pour la grille la plus grossière $G_4$, et que le passage d'une grille plus grossière à une grille moins grossière permet de préciser cette géométrie. De plus, on peut constater que la limite de couches est bien interpolée/extrapolée en respectant la continuité des pendages, ce qui était attendu puisque l'on a résolu un problème inverse visant à minimiser les dérivées secondes de la géométrie de la limite de couches au niveau des mailles à compléter. Ainsi, ce mode de réalisation du procédé selon l'invention permet d'assurer la continuité des pendages, requise par de nombreuses applications du domaine de l'exploration et de l'exploitation pétrolière.

Les résultats obtenus montrent qu'une centaine d'itérations sur la grille fine d'intérêt suffisent largement à bien déterminer la solution avec précision. A titre indicatif, les temps de calculs (sur station de travail Dell T3610) en fonction du nombre d'itérations de gradient conjugué et du nombre de grilles considérées sont donnés dans le Tableau 2. On observe que le résultat sur la grille fine, en ayant considéré 4 grilles grossières intermédiaires, est obtenu selon l'invention en seulement 3 secondes, alors que l'interpolation/extrapolation sur la grille fine, sans passer par des grilles intermédiaires, aurait pris 1h.

Ainsi, cet exemple montre que l'initialisation d'un problème inverse par le résultat d'un problème inverse résolu sur une grille plus grossière permet de très fortement limiter les temps de calcul. Cet avantage permet de traiter des grilles de très grandes tailles (à plusieurs millions de mailles), pour des formations géologiques présentant de nombreuses limites de couches. De plus, le procédé d'interpolation/extrapolation selon l'invention est entièrement automatique et ne requière pas d'intervention manuelle.

Tableau 2

| Nombre de grilles | Temps de calcul |
|---|---|
| 1 | 1 heure |
| 2 | 11 minutes |
| 3 | 78 secondes |

(suite)

| Nombre de grilles | Temps de calcul |
|---|---|
| 4 | 12 secondes |
| 5 | 3 secondes |

**Exemple 2 : cas avec failles**

Au travers de cet exemple, on se propose de déterminer la géométrie de la même limite de couches que celle décrite dans l'exemple précédent, mais dans le cas de la présence de cinq failles.

La Figure 7 présente l'emplacement des $N'_0$ mesures (carrés grisés) par rapport aux cinq plans de failles en question (lignes courbes). La Figure 8 présente le résultat du procédé selon l'invention appliqué avec les mêmes caractéristiques que dans l'exemple précédent, mais en prenant en compte les failles, tel que décrit dans une variante du procédé selon l'invention. En particulier, une étape d'adaptation au cas des failles de l'étape d'initialisation de chaque problème inverse décrite en section 1.3.1 a été mise en œuvre. On peut ainsi constater sur cette Figure que le procédé selon l'invention permet de tenir compte de l'emplacement des failles, en interrompant le processus de d'interpolation/extrapolation d'une limite de couches au niveau des failles, et tout en conservant la continuité des pendages en dehors des failles. De plus, les temps de calcul dans le cas de l'application du procédé selon l'invention avec failles sont très similaires à ceux obtenus dans le cas sans failles (cf Tableau 2). En effet, l'adaptation au cas des failles de l'étape d'initialisation de chaque problème inverse décrite en section 1.3.1), en assurant une initialisation correcte, permet de conserver un nombre d'itérations réduit.

Ainsi le procédé selon l'invention permet de compléter, de façon efficace, automatique et tout en conservant les pendages, des géométries de limites de couches, même dans le cas de la présence de failles.

**Revendications**

1. Procédé, mis en œuvre par ordinateur, de construction d'un modèle géologique d'une formation souterraine formée d'au moins deux couches sédimentaires, à partir de $N'_0$ mesures de la géométrie des limites desdites couches, lesdites $N'_0$ mesures d'une dite limite étant réalisées en un nombre $N'_0$ de mailles d'une grille bidimensionnelle $G_0$, ladite grille $G_0$ étant constituée de $N_0$ mailles, **caractérisée en ce que** :

   - pour chaque limite desdites couches, on détermine ladite géométrie de ladite limite de couches en chaque maille de ladite grille $G_0$ selon au moins les étapes suivantes :

      a) on construit nk grilles $G_k$ à partir de ladite grille $G_0$, chacune des grilles $G_k$, avec k variant de 1 à nk, ayant les mêmes limites spatiales que la grille $G_0$ et ayant un nombre de mailles inférieur à celui d'une grille $G_{k-1}$ ;
      b) on affecte chacune des grilles $G_k$, telles que k compris entre 1 et nk, par interpolation desdites $N'_0$ mesures de ladite géométrie sur des mailles de ladite grille $G_k$ correspondantes ;
      c) on détermine ladite géométrie de ladite limite de couches en chaque maille de ladite grille $G_0$ en déterminant ladite géométrie de ladite limite de couches en chaque maille de chacune des nk grilles $G_k$, avec k variant de 1 à nk, en appliquant successivement, depuis la grille $G_{nk}$ jusqu'à ladite grille $G_0$, une méthode itérative pour minimiser une fonction objectif dépendante d'une propriété relative à ladite géométrie de ladite limite de couches, et en initialisant chacune des grilles $G_k$, avec k variant de 0 à nk-1, par ladite géométrie de ladite limite de couches déterminée sur la grille $G_{k+1}$ ; et

   - à partir de ladite géométrie de chacune desdites limites de couches déterminée en chaque maille de ladite grille $G_0$, on construit ledit modèle géologique.

2. Procédé selon la revendication précédente, dans lequel on construit lesdites nk grilles $G_k$, avec k variant de 1 à nk, en appliquant un facteur d'échelle *f* successivement nk fois aux pas d'échantillonnage spatial de ladite grille $G_0$.

3. Procédé selon la revendication 2, dans lequel ledit facteur d'échelle *f* est vectoriel et est **caractérisé par** une valeur scalaire selon chacune des directions du repère de ladite grille $G_0$.

**4.** Procédé selon la revendication 2, dans lequel ledit facteur d'échelle *f* est scalaire.

**5.** Procédé selon la revendication 4, dans lequel ledit facteur d'échelle *f* vaut 2.

**6.** Procédé selon la revendication 4, dans lequel, à partir d'un nombre prédéfini d'itérations *Iter* et en faisant l'hypothèse d'un doublement des itérations de ladite méthode itérative d'une grille $G_k$ à une grille $G_{k+1}$, avec k variant 0 à nk, un nombre optimal nk desdites grilles $G_k$ à construire est déterminé selon une formule du type :

$$nk = \text{ceiling} \left( log2 \left( \frac{(N0 - N'0)}{Iter} \right) \right),$$

où *ceiling* est une fonction qui associe, à un nombre réel, l'entier immédiatement supérieur.

**7.** Procédé selon l'une des revendications précédentes, dans lequel ladite propriété relative à ladite géométrie de ladite limite de couches est la continuité des pendages.

**8.** Procédé selon la revendication 7, dans lequel ladite fonction objectif pour une grille $G_k$, avec k variant de 0 à nk, est fonction de la somme des dérivées secondes de ladite propriété calculées au niveau des mailles à compléter de la grille $G_k$ considérée.

**9.** Procédé selon l'une des revendications précédentes, dans lequel ladite méthode itérative utilisée pour minimiser ladite fonction objectif est la méthode du gradient conjugué.

**10.** Procédé selon l'une des revendications précédentes, dans lequel on initialise chaque maille d'une grille $G_k$, avec k variant de 0 à nk-1, à partir d'une interpolation bi-linéaire de ladite géométrie de ladite limite de couches déterminée en chaque maille de la grille $G_{k+1}$.

**11.** Procédé selon l'une des revendications précédentes, dans lequel on construit ledit modèle géologique en construisant un maillage volumique à partir de chacune desdites limites de couches et en attribuant à chaque maille dudit maillage volumique au moins une valeur d'une propriété pétrophysique représentative de ladite formation.

**12.** Procédé selon la revendication 8, dans lequel on prend en compte la présence de failles en annulant la valeur des dérivées secondes au niveau desdites failles.

**13.** Produit programme d'ordinateur téléchargeable depuis un réseau de communication et/ou enregistré sur un support lisible par ordinateur et/ou exécutable par un processeur, comprenant des instructions de code de programme pour la mise en œuvre du procédé selon l'une des revendications précédentes, lorsque ledit programme est exécuté sur un ordinateur.

**14.** Procédé d'exploitation d'une formation souterraine, **caractérisé en ce qu'**on réalise les étapes suivantes :

- on construit un modèle géologique de ladite formation au moyen du procédé de construction d'un modèle géologique décrit selon l'une des revendications 1 à 12 ;
- on détermine un schéma d'exploitation optimal du réservoir à partir dudit modèle ;
- on exploite ledit réservoir en mettant en œuvre ledit schéma d'exploitation optimal.

**Patentansprüche**

**1.** Verfahren, umgesetzt durch einen Computer, zur Konstruktion eines geologischen Modells einer unterirdischen Formation, die aus mindestens zwei Sedimentschichten gebildet ist, auf Basis von $N'_0$ Messungen der Geometrie der Grenzen der Schichten, wobei die $N'_0$ Messungen einer solchen Grenze in einer Anzahl $N'_0$ von Maschen eines zweidimensionalen Gitters $G_0$ durchgeführt werden, wobei das Gitter $G_0$ aus $N_0$ Maschen besteht, **dadurch gekennzeichnet, dass**:

- für jede Grenze der Schichten die Geometrie der Schichtengrenze in jeder Masche des Gitters $G_0$ gemäß mindestens den folgenden Schritten bestimmt wird:

a) Konstruieren von nk Gittern $G_k$ auf Basis des Gitters $G_0$, wobei jedes der Gitter $G_k$, mit k zwischen 1 und nk, die gleichen räumlichen Grenzen wie das Gitter $G_0$ aufweist und eine Anzahl von Maschen aufweist, die kleiner als die eines Gitters $G_{k-1}$ ist;

b) Zuordnen jedes der Gitter $G_k$, wobei k zwischen 1 und nk liegt, durch Interpolation der $N'_0$ Messungen der Geometrie zu entsprechenden Maschen des Gitters $G_k$;

c) Bestimmen der Geometrie der Schichtengrenze in jeder Masche des Gitters $G_0$, indem die Geometrie der Schichtengrenze in jeder Masche jedes der nk Gitter $G_k$, mit k zwischen 1 und nk, bestimmt wird, indem nacheinander von dem Gitter $G_{nk}$ bis zu dem Gitter $G_0$ eine iterative Methode zum Minimieren einer Zielfunktion, die von einer Eigenschaft bezogen auf die Geometrie der Schichtengrenze abhängt, durchgeführt wird und indem jedes der Gitter $G_k$, mit k zwischen 0 und nk-1, durch die für das Gitter $G_{k+1}$ bestimmte Geometrie der Schichtengrenze initialisiert wird; und

- Konstruieren des geologischen Modells auf Basis der in jeder Masche des Gitters $G_0$ bestimmten Geometrie jeder der Schichtengrenzen.

2. Verfahren nach dem vorhergehenden Anspruch, wobei die nk Gitter $G_k$, mit k zwischen 1 und nk, konstruiert werden, indem ein Skalierungsfaktor *f* nacheinander nk Male auf die räumlichen Abtastschritte des Gitters $G_0$ angewendet wird.

3. Verfahren nach Anspruch 2, wobei der Skalierungsfaktor *f* vektoriell ist und durch einen skalaren Wert gemäß jeder der Richtungen des Koordinatensystems des Gitters $G_0$ gekennzeichnet ist.

4. Verfahren nach Anspruch 2, wobei der Skalierungsfaktor *f* skalar ist.

5. Verfahren nach Anspruch 4, wobei der Skalierungsfaktor *f* gleich 2 ist.

6. Verfahren nach Anspruch 4, wobei auf Basis einer vordefinierten Anzahl von Iterationen *Iter* und unter der Annahme einer Verdoppelung der Iterationen der iterativen Methode von einem Gitter $G_k$ zu einem Gitter $G_{k+1}$, mit k zwischen 0 und nk, eine optimale Anzahl nk der zu konstruierenden Gitter $G_k$ gemäß einer Formel des folgenden Typs bestimmt wird:

$$nk = ceiling\left(log2\left(\frac{(N0 - N'0)}{Iter}\right)\right),$$

wobei *ceiling* eine Funktion ist, die einer reellen Zahl die nächsthöhere ganze Zahl zuweist.

7. Verfahren nach einem der vorhergehenden Ansprüche, wobei die Eigenschaft bezogen auf die Geometrie der Schichtengrenze die Kontinuität der Neigungen ist.

8. Verfahren nach Anspruch 7, wobei die Zielfunktion für ein Gitter $G_k$, mit k zwischen 0 und nk, eine Funktion der Summe der im Bereich der zu komplettierenden Maschen des betrachteten Gitters $G_k$ berechneten zweiten Ableitungen der Eigenschaft ist.

9. Verfahren nach einem der vorhergehenden Ansprüche, wobei die iterative Methode, die zum Minimieren der Zielfunktion benutzt wird, die Methode des konjugierten Gradienten ist.

10. Verfahren nach einem der vorhergehenden Ansprüche, wobei jede Masche eines Gitters $G_k$, mit k zwischen 0 und nk-1, auf Basis einer bilinearen Interpolation der in jeder Masche des Gitters $G_{k+1}$ bestimmten Geometrie der Schichtengrenze initialisiert wird.

11. Verfahren nach einem der vorhergehenden Ansprüche, wobei das geologische Modell konstruiert wird, indem ein volumenbezogenes Maschenraster auf Basis jeder der Schichtengrenzen konstruiert wird und indem jeder Masche des volumenbezogenen Maschenrasters mindestens ein Wert einer petrophysikalischen Eigenschaft, die für die Formation repräsentativ ist, zugewiesen wird.

12. Verfahren nach Anspruch 8, wobei das Vorhandensein von Verwerfungen berücksichtigt wird, indem der Wert der zweiten Ableitungen im Bereich der Verwerfungen aufgehoben wird.

**13.** Computerprogrammprodukt, das aus einem Kommunikationsnetzwerk heruntergeladen und/oder auf einem computerlesbaren Medium aufgezeichnet und/oder von einem Prozessor ausgeführt werden kann, das Programmcodeanweisungen zur Umsetzung des Verfahrens nach einem der vorhergehenden Ansprüche beinhaltet, wenn das Programm auf einem Computer ausgeführt wird.

**14.** Verfahren zum Abbau einer unterirdischen Formation, **dadurch gekennzeichnet, dass** die folgenden Schritte durchgeführt werden:

- Konstruieren eines geologischen Modells der Formation mit Hilfe des Verfahrens zur Konstruktion eines geologischen Modells, das in einem der Ansprüche 1 bis 12 beschrieben wird;
- Bestimmen eines optimalen Plans zum Abbau des Vorkommens auf Basis des Modells;
- Abbauen des Vorkommens durch Umsetzung des optimalen Abbauplans.

**Claims**

**1.** Computer-implemented method for constructing a geological model of a subterranean formation formed from at least two sedimentary layers, on the basis of $N'_0$ measurements of the geometry of the limits of said layers, said $N'_0$ measurements of a said limit being carried out in a number $N'_0$ of cells of a two-dimensional grid $G_0$, said grid $G_0$ being made up of $N_0$ cells, **characterized in that**:

- for each limit of said layers, said geometry of said layer limit is determined in each cell of said grid $G_0$ by means of at least the following steps:

a) nk grids $G_k$ are constructed from said grid $G_0$, each of the grids $G_k$, with k varying from 1 to nk, having the same spatial limits as the grid $G_0$ and having a number of cells lower than that of a grid $G_{k-1}$;
b) each of the grids $G_k$, such that k is comprised between 1 and nk, is allocated via interpolation of said $N'_0$ measurements of said geometry in the corresponding cells of said grid $G_k$;
c) said geometry of said layer limit is determined in each cell of said grid $G_0$ by determining said geometry of said layer limit in each cell of each of the nk grids $G_k$, with k varying from 1 to nk, by applying, successively, from the grid $G_{nk}$ to said grid $G_0$, an iterative method to minimize an objective function dependent on a property relative to said geometry of said layer limit, and by initializing each of the grids $G_k$, with k varying from 0 to nk-1, with said geometry of said layer limit determined on the grid $G_{k+1}$; and

- on the basis of said geometry, of each of said layer limits, determined in each cell of said grid $G_0$, said geological model is constructed.

**2.** Method according to the preceding claim, wherein said nk grids $G_k$, with k varying from 1 to nk, are constructed by applying a scale factor *f* successively nk times to the spatial sampling pitch of said grid $G_0$.

**3.** Method according to Claim 2, wherein said scale factor *f* is vectorial and is **characterized by** a scalar value in each of the directions of the coordinate system of said grid $G_0$.

**4.** Method according to Claim 2, wherein said scale factor *f* is scalar.

**5.** Method according to Claim 4, wherein said scale factor *f* is equal to 2.

**6.** Method according to Claim 4, wherein, starting with a predefined number of iterations *Iter,* and assuming the number of iterations of said iterative method doubles from a grid $G_k$ to a grid $G_{k+1}$, with k varying from 0 to nk, an optimal number nk of said grids $G_k$ to be constructed is determined using a formula of the type:

$$nk = ceiling\left(log2\left(\frac{(N0 - N'0)}{Iter}\right)\right),$$

where *ceiling* is a function that associates, with a real number, the immediately higher integer.

7. Method according to one of the preceding claims, wherein said property relative to said geometry of said layer limit is dip continuity.

8. Method according to Claim 7, wherein said objective function for a grid $G_k$, with k varying from 0 to nk, is a function of the sum of the second derivatives of said property, which are computed in cells to be completed of the grid $G_k$ in question.

9. Method according to one of the preceding claims, wherein said iterative method used to minimize said objective function is the conjugate gradient method.

10. Method according to one of the preceding claims, wherein each cell of a grid $G_k$, with k varying from 0 to nk-1, is initialized on the basis of a bi-linear interpolation of said geometry, of said layer limit, determined in each cell of the grid $G_{k+1}$.

11. Method according to one of the preceding claims, wherein said geological model is constructed by constructing a volume mesh on the basis of each of said layer limits and by attributing, to each cell of said volume mesh, at least one value of a petrophysical property representative of said formation.

12. Method according to Claim 8, wherein the presence of faults is taken into account by decreasing to zero the value of the second derivatives level with said faults.

13. Computer-program product downloadable from a communication network and/or stored on a medium that is readable by computer and/or executable by a processor, comprising program-code instructions for implementing the method according to one of the preceding claims, when said program is executed on a computer.

14. Method for exploiting a subterranean formation, **characterized in that** the following steps are carried out:

   - a geological model of said formation is constructed by means of the described method for constructing a geological model according to one of Claims 1 to 12;
   - a scheme for optimal exploitation of the reservoir is determined on the basis of said model;
   - said reservoir is exploited by implementing said optimal exploitation scheme.

FIG. 1

FIG. 2

FIG. 3

FIG. 4A

X

FIG. 4B

X

FIG. 4C

Y

X

FIG. 4D

Y

X

FIG. 4E

FIG. 5

FIG. 6

## RÉFÉRENCES CITÉES DANS LA DESCRIPTION

**Documents brevets cités dans la description**

- FR 2804513 B1
- US 6590832 B2
- FR 2874270 B1
- US 8014229 BB
- FR 2854468 B1
- US 6868039 B2
- FR 1669778 B1
- US 734595 B2
- EP 0889331 A1
- US 6374201 B1

**Littérature non-brevet citée dans la description**

- **INOUE, H.** A least-Squares smooth fitting for irregularly spaced data: finite element approach using the cubic {B}-splines basis. *Geophysics,* 1986, vol. 51, 2051-2066
- Interpolation with Triangulated Surfaces and Curvature Minimisation. **LÉGER M.** Curves and Surfaces with Applications in CAGD. Vanderbilt Univ. Press, 1997, 85-94
- **MALLET, J.-L.** Discrète smooth interpolation in geometric modelling. *Computed-Aided Design.,* Avril 1992, vol. 24 (4), 178-191
- **WHEELER, H.** Time-Stratigraphy. *BULLETIN OF THE AMERICAN ASSOCIATION OF PETROLEUM GEOLOGISTS,* Mai 1958, vol. 42 (5), 1047-1063